# EUROPEAN PATENT APPLICATION

(11) **EP 1 626 118 A2**
(43) Date of publication of application: **15.02.2006**
(21) Application number: 05017484.6
(22) Date of filing: 11.08.2005
(51) Int. Cl.: D06M 13/395, D06M 15/564, D06M 16/00

(54) **Yarns and fabrics having long-lasting mosquito repellent or antibacterial effect and their preparation**

(30) Priority: 11.08.2004 CN 200410058053
(71) Applicant: Formosa Taffeta Co.,Ltd., Taiwan (TW)
(72) Inventor: Chen, Young-Chin, Taiwan (TW); Chung, Hsing-Nan, Taiwan (TW); Lin, Shin-Mei, Taiwan (TW)
(74) Representative: Hrovat, Andrea Darinka

(57) **Abstract**

The subject invention pertains to yarns and fabrics having a long-lasting mosquito repellent or antibacterial effect. The subject invention also pertains to a method of producing yarns and fabrics having a long-lasting mosquito repellent or antibacterial effect.

## Description

### FIELD OF THE INVENTION

The subject invention pertains to yarns and fabrics having a long-lasting mosquito repellent or antibacterial effect. The subject invention also pertains to a process for producing yarns and fabrics having a long-lasting mosquito repellent or antibacterial effect.

### BACKGROUND OF THE INVENTION

Mosquito repellent garments in the market are produccd by dyeing and finishing processes, generally by soaking and sucking, to bond the compounds having a mosquito repellent effect to fibers. However, the bonding of the compounds to the fibers is poor and the compounds are prone to be released from the fibers during laundering such that the mosquito repellent effect of the garments is not long-lasting.

Accordingly, yarns and fabrics having a long-lasting mosquito repellent or antibacterial effect and their preparation arc highly desired.

### SUMMARY OF THE INVENTION

The objective of the subject invention is to provide yarns and fabrics having a long-lasting mosquito repellent or antibacterial effect.

Another objective of the subject invention is to provide a process for producing yarns and fabrics having a long-lasting mosquito repellent or antibacterial effect.

### DETAILED DESCRIPTION OF THE INVENTION

By way of illustration and to provide a more complete appreciation of the subject invention with many of the attendant advantages thereof, the following detailed description is given concerning yarns and fabrics having long-lasting mosquito repellent or antibacterial effect and their preparation.

The subject invention relates to yarns and fabrics having a long-lasting mosquito repellent or antibacterial (bacteria, fungi, and the like) effect, wherein the yarns and fabrics have been treated by polyisocyanates and compounds having a mosquito repellent or antibacterial effect such that the compounds having a mosquito repellent or antibacterial effect are intensively bonded thereto. Due to the intensive bonding, the yarns and fabrics still bear a mosquito repellent or antibacterial effect after up to 25 launderings because they contain sufficient amounts of compounds having mosquito repellent or antibacterial effect.

The subject invention also relates to a process for producing yarns and fabrics having a long-lasting mosquito repellent or antibacterial effect, comprising adding polyisocyanates and compounds having a mosquito repellent or antibacterial effect in a dipping step, and subjecting the yarns and fabrics to wringing, drying and curing steps such that the compounds having a mosquito repellent or antibacterial effect are intensively bonded to the yarns and fabrics.

The polyisocyanates suitable for the invention arc of a formula of R-N=C=O, wherein R is an alkyl having 5 to 20 carbon atoms. The examples of the polyisocyanates include, but not limited to, polyhexyl isocyanate, polyoctyl isocyanate, polynonyl isocyanate, and polydodecyl isocyanate.

Permethrin (CAS Number 52645-53-1) and octylisothiazolone (CAS Number 26530-20-1) are two commonly used compounds having a mosquito repellent or antibacterial effect.

Permethrin has a mosquito repellent effect and can inhibit bacteria and fungi from spreading and growing. The LD50 of Permethrin for acute oral toxicity in rats is up to 470 mg/kg. The LD50 of Permethrin for acute dermal toxicity in rabbits is greater than 2500 mg/kg.

Octylisothiazolone has a mosquito repellent effect and can inhibit bacteria and fungi from spreading and growing. The LD50 of octylisothiazolone for acute oral toxicity in rats is up to 270 mg/kg. The LD50 of octylisothiazolonc for acute dermal toxicity in rabbits is up to 311 mg/kg.

Meanwhile, their skin tolerance has been approved according to the OECD Guidelines for Testing of Chemicals and Directive of the European Commission.

According to the subject invention, a process for producing yarns and fabrics having a long-lasting mosquito repellent or antibacterial effect comprises adding polyisocyanates and compounds having a mosquito repellent or antibacterial effect in a dipping step. Generally, the process for producing fabrics comprises the steps of scouring, dcsizing, presetting, dyeing, drying, settling, dipping, wringing, drying, curing, printing, soaping, and a final treatment. Optionally, the order of the steps can be adjusted or additional steps can be applied therebetween if the adjustment of order and the additional steps would not result in a negative influence on the desired mosquito repellent or antibacterial effect. For example, when the material to be treated is polyester, an etching step can be applied between the presetting step and dycing step to improve the properties of polyester such as feel, and/or a reduction washing step can be conducted for the consideration of a medium color (the concentration of dye is, for example. 1.0 to 3.0%) or a dark color (the concentration of dye is, for example, over 3.0%). Alternatively, an assessment step can be conducted between any appropriate step to control the properties of fabrics (for example color, evenness and the like).

The steps of the process of the invention are described as follows.

### Scouring, desizing

A griege is scoured and desizcd at appropriate conditions. For example, the griege is scoured and desized at a speed of 400 to 600 yards/piece to remove the oils and impurities on the surface of the griege. The conditions for conducting the scouring and desizing include, but not limited to, a temperature of 70°C to 110°C, preferably 80°C to 110°C, and a speed of 50 to 60 meter/min.

### Presetting

The griege is then delivered to a presetting machine to preset the griege to form a fabric. The speed of the presetting machine can be, for example, from 15 to 120 meter/min. The temperature of the presetting machine can be, for example, 100°C to 210°C.

### Dyeing

The fabric is dyed with suitable dyes, for example, acid dyes, disperse dyes, cationic dyes, reactive dyes, indanthrene dyes (vat) and direct dyes, together with suitable dying auxiliaries in, for example, an air flow dyeing machine, a jigger dyeing machine, a winch dyeing machine, a beam dyeing machine, a jet dying machine, or a rapid dyeing machine under, for example, a temperature of 50°C to 150°C.

### Drying, settling

The fabric is dried in a drying machine (for example, a continuous drying machine) under an appropriate temperature (for example. 100°C to 120°C). The fabric is then settled at an appropriate temperature (for example, 140°C to 180°C).

If the fabric is made of nylon, it can be further subjected to a fastness treatment by tannic acid or citric acid to improve the fastness of the fabric.

### Dipping, wringing, drying, curing

An appropriate amount of a solution of polyisocyanate (5 to 20 wt%) is mixed with a solution of Permethrin (3 to 10 wt%) or a solution of ocrylisothiazolone (3 to 10 wt%) in an appropriate ratio; for example, a ratio of 1:2, i.e., 30g/l of polyisocyanate is mixed with 60g/l or permethrin or octylisothiazolone. The mixed solution is added into a dipping tank. The fabric is dipped in the tank once or twice. The fabric is then wrung, dried, and cured such that Permethrin or octylisoehiazolone is intensively bonded to the fabric. The pressure of wringing is, for example, 2.0 to 4.0 kg/cm². The drying temperature is, for example, 100°C to 120°C. The curing temperature is, for example, 120°C to 170°C.

### Printing

The fabric is treated in a printing machine, for example, a roller-printing machine or an automatic screen-printing machine. A suitable amount of paste for dyeing and/or printing is printed onto the surface of the fabric at a speed of 5 to 300 meter/min to form a printing pattern on the fabric. The fabric is dried at a temperature from 50°C to 210°C and settled at a temperature from 100°C to 210°C to render the paste for dyeing and/or printing bonding to the fabric.

### Soaping

The fabric is then subjected to a soaping step, for example, at a speed of 300 to 700 yards/piece, to remove the impurities and processing agent on the fabric. The soaping conditions include, but not limited to, a soaping temperature of 50°C to 120°C and a speed of 40 to 70 meter/min.

### Final treatment

The fabric can be optionally subjected to a final treatment, for example, a treatment for softening, water-repelling, water-resistance, or a special function. For example, the fabric can be delivered to a tank containing a softening agent to conduct the softening treatment or to a tank containing a water-repellent agent to conduct the water-repelling treatment. Then, the fabric is delivered to a machine at a suitable speed (for example, 35 to 55 meter/min), a suitable height (60 to 100 mm, for example, 80 mm), a suitable angle (0.75 to 1.05 mm; for example, 0.95 mm), and a suitable temperature (110 °C to 130 °C; for example 120 °C) to conduct the waterproofing treatment. The fabric is then stored for a suitable period to effect crosslinking. The fabric can be optionally subjected to a final setting to obtain the final product.

If the fabric is made of polyester, for obtaining an improved feel, an etching step can be applied between the presetting step and dyeing step. Persons having ordinary skill in the art can select appropriate etching agents to effect etching. The etching agents include, but not limited to, sodium hydroxide, sodium carbonate, or sodium hydrogen carbonate in a machine, such as a dyeing machine or continuous machine, to conduct etching.

### Test for a long-lasting mosquito repellent or antibacterial effect

The fabric is subjected to a test for determining the amount of Permethrin and octylisothiazolonc contained therein. The fabric shows a mosquito repellent or antibacterial effect if the amount of Permethrin contained in the fabric is equal to or greater than 10ppm or the amount of octylisothiazolone contained in the fabric is equal to or greater than 8ppm.

### Testing method

The compounds contained in the fabric are extracted, and determined by High Performance Liquid Chromatography (HPLC).

### Testing procedure

The fabric is laundered 25 times (JIS L02173-103). Then, the fabric is extracted for 4 hours with methylene dichloride in a Soxhlet extractor. The extract thus obtained is applied into HPLC for determining the amount of Permethrin or octylisothiazolone.

The following example is provided to further explain the invention, from which artisans can further appreciate the invention. However, the example should not be considered as a limitation to the scope of the invention.

### Example

A griege of 450 yards/piece is subjected to a scouring treatment and a desizing treatment, wherein the temperature of the scouring liquid and desizing liquid is about 90°C and the speed is 55 meter/min. The griege is then delivered to a presetting machine to be preset to form a fabric at a speed of 80 meter/min and at a temperature of 200°C. A solution of polyisocyanate (12.5 wt%) is mixed with a solution of Permethrin (6.5 wt%) or a solution of octyusothiazolonc (6.5 wt%) in a ratio of 1:2. The mixed solution is added into a dipping tank. The fabric is dipped in the dipping tank and then is wrung (3 kg/cm²), dried (145°C) and cured (145 °C). The fabric is treated in a roller-printing machine or an automatic screen-printing machine with a suitable paste for dyeing and/or printing at a speed of 15 1 meter/min to form a selected printing pattern on the fabric. The fabric is dried at a temperature of 110°C and settled at a temperature of 160°C. The fabric is soaped at 450 yards/piece at a temperature of 100°C and at a speed of 55 meter/min. The fabric is then delivered to a tank containing a water-repellant agent to conduct a water-repelling treatment. The fabric is then delivered to a waterproofing machine at a speed of 45 meter/min, with a height of 80 mm, an angle of 0.95 mm, and a temperature of 120°C to conduct a waterproof treatment. Then, the fabric is stored for a period of 16 hours to effect crosslinking: The fabric is subjected to a final setting to obtain a final product.

### Results of testing

The amount of the compound contained in the fabric is determined by extraction and HPLC. L0 represents the amount of the compound before laundering. L25 represents the amount of the compound after 25 launderings. The results of the test are listed in the table as follows:

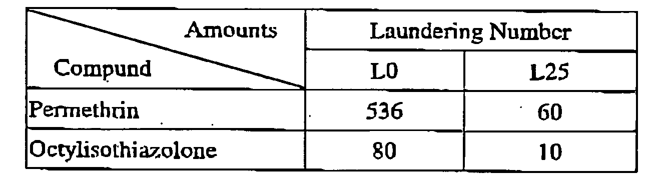

The table shows that the amount of Permethrin contained in the fabric after 25 launderings is greater than 10ppm and the amount of octylisothiazolone contained in the fabric after 25 launderings is greater than 8ppm. The fabric of the subject invention indeed has a long-lasting mosquito repellent and antibacterial effect.

The subject invention may, of course, be carried out in other specific ways than those herein set forth without departing from the spirit and essential characteristics of the subject invention. The present embodiments are, therefore, to be considered in all respects as an illustration and are not restrictive.

## Claims

1. A yarn having a long-lasting mosquito repellent or antibacterial effect, wherein the yarn has been treated by a polyisocyanate and a compound having a mosquito repellent or antibacterial effect.

2. A yarn according to Claim 1, wherein the polyisocyanate is of a formula of R-N=C=O, wherein R is an alkyl having 5 to 20 carbon atoms.

3. A yarn according to Claim 1 and/or Claim 2, wherein the compound having mosquito repellent or antibacterial effect is Permethrin or octylisothiazolone.

4. A yarn according to one or more of the preceding claims, wherein the yarn has a mosquito repellent or antibacterial effect after 25 launderings according to JIS L02173-103.

5. A fabric having a long-lasting mosquito repellent or antibacterial effect, wherein the fabric has been treated by a polyisocyanate and a compound having a mosquito repellent or antibacterial effect.

6. A fabric according to Claim 5, wherein the polyisocyanate is of a formula of R-N=C=O, wherein R is an alkyl having 5 to 20 carbon atoms.

7. A fabric according to Claim 5 and/or 6, wherein the compound having a mosquito repellent or antibacterial effect is Permethrin or octylisothiazolone.

8. A fabric according to one or more of the preceding claims, wherein the a fabric has mosquito repellent or antibacterial effect after 25 launderings according to JIS L02173-103.

9. A process for producing a yarn having a long-lasting mosquito repellent or antibacterial effect, comprising adding a polyisocyanate and a compound having a mosquito repellent or antibacterial effect in a dipping step.

10. A process according to Claim 9, wherein the polyisocyanate is of a formula of R-N=C=O, wherein R is an alkyl having 5 to 20 carbon atoms.

11. A process according to Claim 9 and/or Claim 10, wherein the compound having mosquito repellent or antibacterial effect is Permethrin or octylisothiazolone.

12. A process according to one or more of the preceding claims, wherein the yarn has mosquito repellent or antibacterial effect after 25 launderings according to JTS L02173-103.

13. A process for producing a fabric having a long-lasting mosquito repellent or antibacterial effect, comprising adding a polyisocyanate and a compound having a mosquito repellent or antibacterial effect in a dipping step.

14. A process according to Claim 13, wherein the polyisocyanate is of a formula of R-N=C=O, wherein R is an alkyl having 5 to 20 carbon atoms.

15. A process according to Claim 13 and/or Claim 14, wherein the compound having a mosquito repellent or antibacterial effect is Permethrin or octylisothiazolonc.

16. A process according to one or more of the preceding claims, wherein the fabric has a mosquito repellent or antibacterial effect after 25 launderings according to JIS L02173-103.
